Europäisches Patentamt

European Patent Office

Office européen des brevets

(19)

(11) Veröffentlichungsnummer: **0 314 942 B1**

# EUROPÄISCHE PATENTSCHRIFT

(12)

(45) Veröffentlichungstag der Patentschrift:
10.07.91 Patentblatt 91/28

(51) Int. Cl.⁵ : **B29C 45/47**

(21) Anmeldenummer : **88116757.1**

(22) Anmeldetag : **10.10.88**

(54) Verriegelungseinrichtung für den Plastifizierzylinder einer Kunststoff-Spritzgiessmaschine.

(30) Priorität : 22.10.87 DE 3735769

(43) Veröffentlichungstag der Anmeldung :
10.05.89 Patentblatt 89/19

(45) Bekanntmachung des Hinweises auf die
Patenterteilung :
10.07.91 Patentblatt 91/28

(84) Benannte Vertragsstaaten :
AT CH DE ES FR GB IT LI NL

(56) Entgegenhaltungen :
Keine

(73) Patentinhaber : Hehl, Karl
Arthur-Hehl-Strasse 32
W-7298 Lossburg 1 (DE)

(72) Erfinder : Hehl, Karl
Arthur-Hehl-Strasse 32
W-7298 Lossburg 1 (DE)

(74) Vertreter : Mayer, Friedrich, Dr.
Patentanwälte Dr. Mayer & Frank Westliche 24
W-7530 Pforzheim (DE)

## Beschreibung

Die Erfindung bezieht sich auf eine Verriegelungseinrichtung entsprechend dem Oberbegriff des Patentanspruches 1.

Bei einer bekannten Verriegelungsvorrichtung dieser Art (DE 35 13 411 A1 und DE-PS 35 26 710 C1) sind die Entriegelungszylinder stationär in der Spritzgießeinheit angeordnet. Sie steuern die Schieber der Verriegelungseinrichtung mit ihrem bewegbaren Antriebselement. Eine solche Verriegelungsvorrichtung ist erst nach voller Montage der zugehörigen Spritzgießeinheit funktionsfähig. In der vorgenannten DE-PS 35 26 710 C1 wird der durch ein erstes Schieberpaar hintergriffene und dadurch axial widergelagerte Plastifizierzylinder mit Hilfe eines zweiten Schieberpaares axial vorgespannt, dessen Schieber mit Schrägflächen versehen sind, die mit korrespondierenden Schrägflächen des Plastifizierzylinders zusammenarbeiten.

Hiervon ausgehend liegt der Erfindung die Aufgabe zugrunde, eine Verriegelungseinrichtung der eingangs genannten Art derart weiterzubilden, daß günstigere Voraussetzungen für eine rationelle Serienfertigung, insbesondere für die Montage vorliegen, indem sie als funktionsfähige bauliche Einheit austauschbar am Trägerblock angeordnet und im Reparaturfalle mit wenigen Handgriffen ausgewechselt werden kann.

Diese Aufgabe wird erfindungsgemäß durch die im Patentanspruch 1 genannten Merkmale gelöst.

Bei einem solchen Aufbau der Verriegelungseinrichtung hängt es von den Reibungswiderständen in den Führungen der Schieber ab, ob sich bei Betätigung der Entriegelungszylinder zuerst der aktive Schieber oder der passive Schieber in Verriegelungsposition bewegt oder ob sich die Bewegungen beider Schieber überschneiden. Da die genannten Reibungswiderstände in den Führungen der beiden Schieber in aller Regel nicht gleich groß sind, werden die Schieber bei Betätigung der Entriegelungszylinder asynchron aus ihrer Hintergriffsposition herausgefahren. Dasselbe gilt für die durch die Federn bewirkte Bewegung der Schieber in Verriegelungsposition. Die asynchrone Bewegung der Schieber hat indessen keinen negativen Einfluß auf die Qualität oder die Geschwindigkeit der Verriegelung. Wesentlich ist bei alledem, daß der spezifische Aufbau der Verriegelungseinrichtung zu einer sehr einfachen und darum kostengünstig zu fertigenden baulichen Einheit führt, die mit einem sehr geringen Montageaufwand als Ganzes auf den Block der Spritzgießeinheit aufgesetzt oder abgenommen bereits außerhalb der Spritzgießeinheit auf Funktionsfähigkeit überprüft und als solche auf Lager gehalten werden kann.

Dank der Abnehmbarkeit der Verriegelungseinrichtung als Ganzes vom Block liegen zudem die Voraussetzungen dafür vor, daß sie im Bedarfsfalle gegen eine extrem einfache und daher kostengünstige mechanische Verriegelungseinrichtung austauschbar ist. Letztere umfaßt nach Patentanspruch 9 zwei mittels Gewindebolzen in Hintergriffsposition verspannbare Verriegelungsleisten, deren Eingriffspartien identisch sind mit den Eingriffspartien der nach Programm hydraulisch betätigbaren Schieber.

Der wahlweise Einsatz einer mechanischen Verriegelungseinrichtung oder einer nach Programm steuerbaren hydraulischen Verriegelungseinrichtung für einen automatischen Wechsel der Plastifiziereinheit kann beispielsweise aktuell sein, wenn ein Käufer eine Spritzgießeinheit zunächst mit einem geringstmöglichen finanziellen Aufwand erwerben und zu einem späteren Zeitpunkt auf die hydraulische Verriegelungseinrichtung umrüsten will.

Nachstehend wird die Erfindung anhand der Zeichnung an einem Ausführungsbeispiel erläutert. Es zeigen:

| | |
|---|---|
| Fig. 1 | Die mit der Verriegelungseinrichtung versehene Kunststoff-Spritzgießeinheit (Spritzgießeinheit) in Draufsicht, |
| Fig. 2 | den Trägerblock (Block) der Plastifiziereinheit mit eingefügten Antriebszylindern in perspektivischer und vergrößerter Darstellung ; |
| Fig. 3 | einen Antriebszylinder der Spritzgießeinheit im Längsschnitt, |
| Fig. 4 | den Block der Spritzgießeinheit nach Montage der Antriebszylinder und der Einspritzzylinder mit in Arbeitsposition verriegeltem Plastifizierzylinder, sowie mit einem Stützbügel für die Führungssäulen in einer Darstellung gemäß Fig. 2, |
| Fig. 5 | den mit einem hydraulischen Arretierzylinder zur axialen Arretierung des Plastifizierzylinders versehenen Stützbügel gemäß Fig. 4, |
| Fig. 6, 7 | den Block mit einer von Hand zu montierenden Verriegelungseinrichtung (Fig. 6) und mit der hydraulischen Verriegelungseinrichtung (Fig. 7), |
| Fig. 8 | die Verriegelungseinrichtung gemäß Fig. 7 in Explosionszeichnung und |
| Fig. 9, 9a, 10 | die Verriegelungseinrichtung gemäß Fig. 7, 8 in einem quer zur Symmetrieebene gehenden vertikalen Schnitt (Fig. 9, 9a) und in einem durch die Spritzachse gehenden vertikalen Schnitt (Fig. 10). |

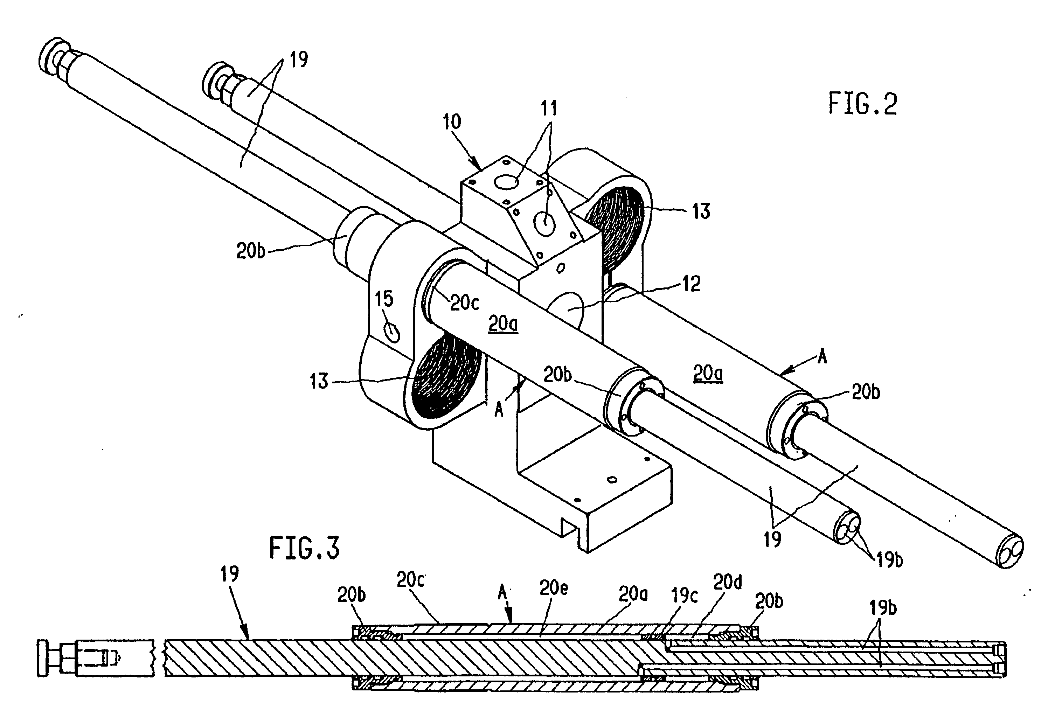

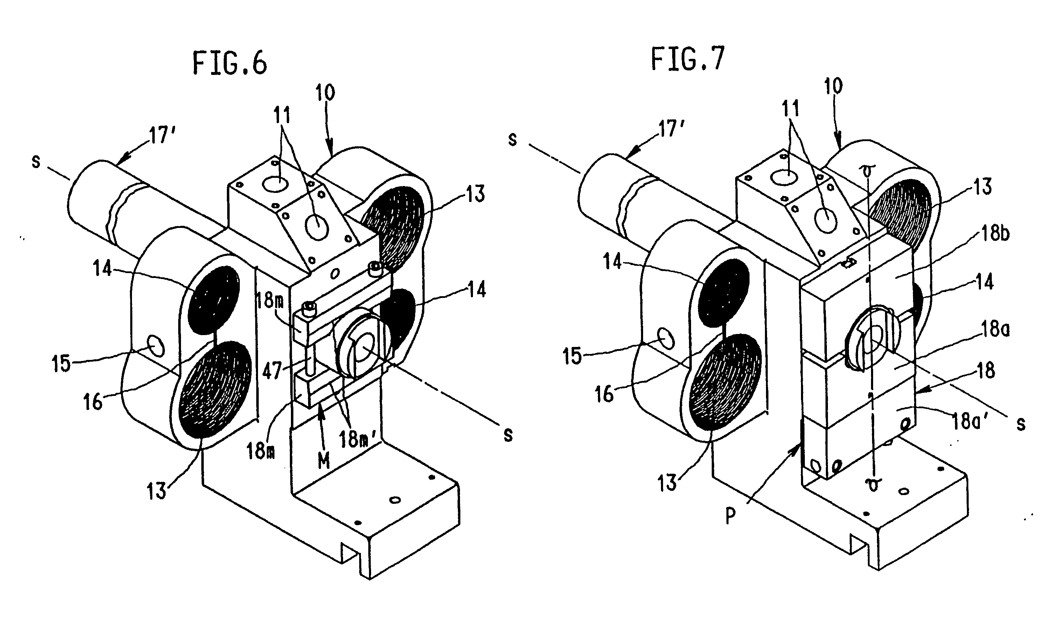

Die mit der Verriegelungseinrichtung P ausgerüstete Kunststoff-Spritzgießeinheit umfaßt einen den Plastifizierzylinder 17' einer Plastifiziereinheit 17 aufnehmenden Trägerblock (Block 10). In Bohrungen 14 des Blockes 10 sind hydraulische Antriebszylinder A zum axialen Verschieben der Spritzgießeinheit auf Führungssäulen 19 aufgenommen. Die Kolben 19c der Antriebszylinder A sitzen auf den Führungssäulen 19 fest auf. Außerdem sind im Block 10 zwei weitere Bohrungen 13 vorgesehen, in welche hydraulische Einspritzzylinder E zum axialen Antreiben einer im Plastifizierzylinder 17 angeordneten, rotierbaren Förderschnecke 35 eingefügt sind. Die Antriebszylinder A und die Einspritzzylinder E stehen mittels Außengewinden 20c und 21f mit Innengewinden der Bohrungen 14, 13 im Gewindeeingriff. Sie sind nach Justierung in Arbeitsposition mittels einer Spannschraube 24 verspannbar, die dank eines Schlitzes 16 zwischen den Bohrungen 14, 13 eine Verspannungsdeformation am Block 10 bewirken kann. Mit 15 ist die Gewindebohrung für die Spannschraube bezeichnet. Wie insbesondere aus den Figuren 6, 7 ersichtlich, liegen die beiden Bohrungen 14 für die Antriebszylinder A und die beiden weiteren Bohrungen 13 für die Einspritzzylinder E je diagonal im Block 10 der Spritzgießeinheit. Daher befindet sich in jeder Symmetriehälfte des Blockes 10 eine Bohrung 14 und eine weitere Bohrung 13 je symmetrisch zu einer Symmetrieebene v-v. Der Aufbau des Antriebszylinders A ist in Fig. 3 verdeutlicht. Danach bilden die Führungssäulen 19 die Kolbenstangen der Antriebszylinder A. Die durch Stahlhülsen gebildeten eigentlichen Zylinder 20a umschließen die Führungssäulen 19 mit Spiel zur Bildung der Zylinderräume 20e und 20d, die über Bohrungen 19b in den Führungssäulen 19 wechselweise mit Drucköl beschickbar sind. Beim Auf- und Absetzen auf die Spritzgießform gleitet die Spritzgießeinheit über die Zylinderdeckel 20b der Antriebszylinder A auf dem Mantel der Führungssäulen 19.

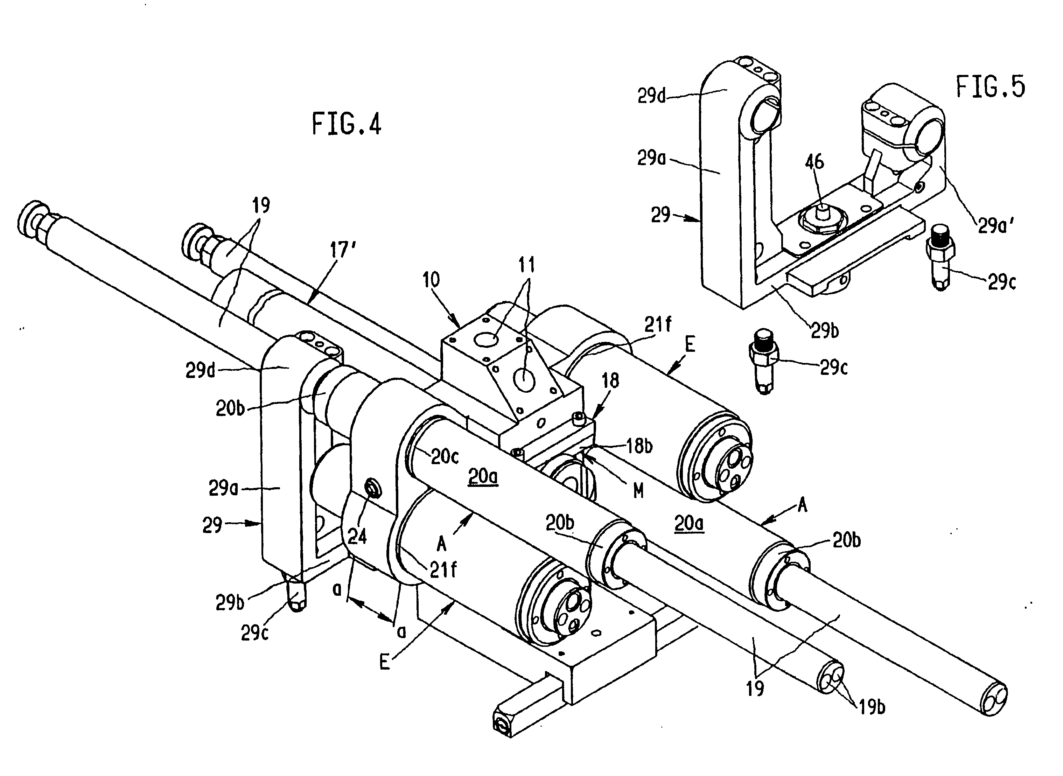

Wie insbesondere aus den Figuren 4, 5 ersichtlich, sind die Führungssäulen 19 mittels eines stationären Stützbügels 29 auf einem Maschinenfuß über Justierschrauben 29c abgestützt. Der Stützbügel 29 umfaßt einen längeren Stützschenkel 29a und einen kürzeren Stützschenkel 29a'. Die Stützschenkel greifen mittels Spannmuffen 29d unmittelbar vor den vorderseitigen Enden der Antriebszylinder A an den Führungssäulen 19 an und sind über einen Steg 29b miteinander verbunden. In der Mitte des Steges ist ein vertikal arbeitender hydraulischer Arretierzylinder 46 zur zeitweisen axialen Arretierung der Plastifiziereinheit 17 eingepaßt.

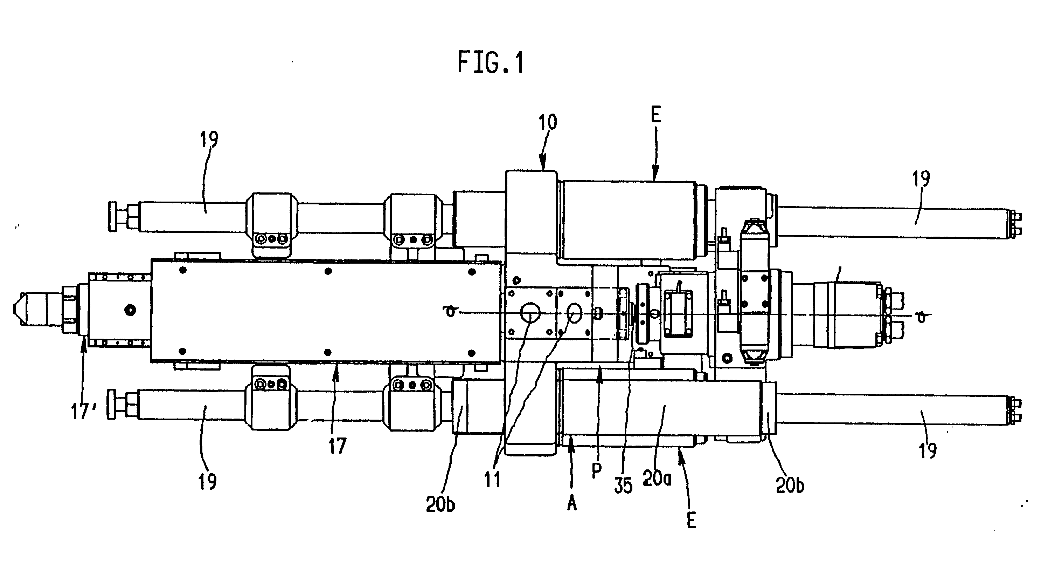

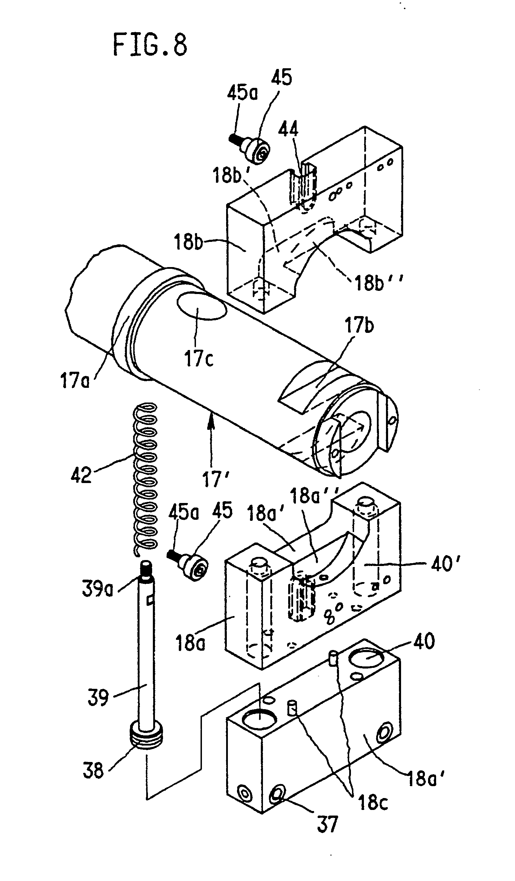

Die Einfallöffnung 17c (Fig. 8) des in Arbeitsposition befindlichen Plastifizierzylinders 17' liegt am Ausgang des Zufuhrkanals 11 (Fig. 1, 2, 4, 6, 7) im Block 10, durch welchen Zufuhrkanal der Kunststoff in den Plastifizierzylinder 17' gelangt.

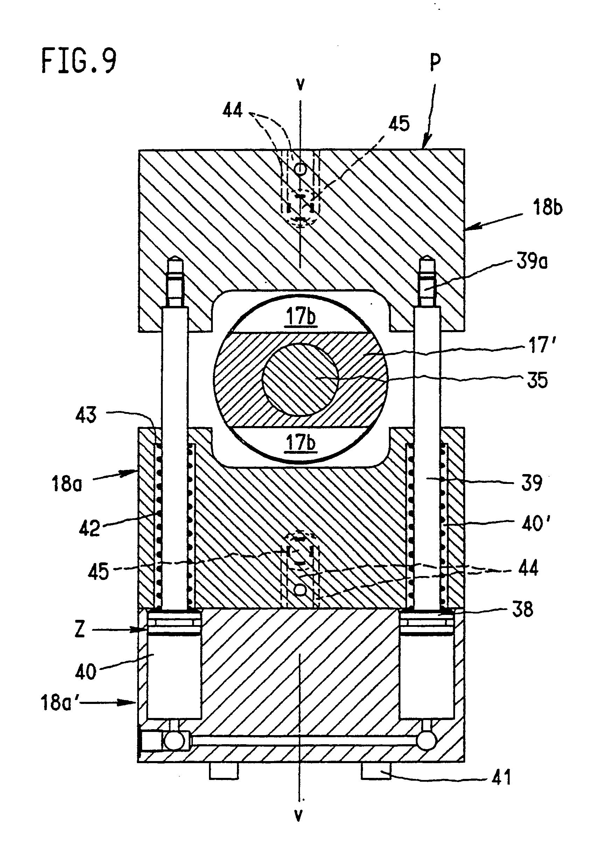

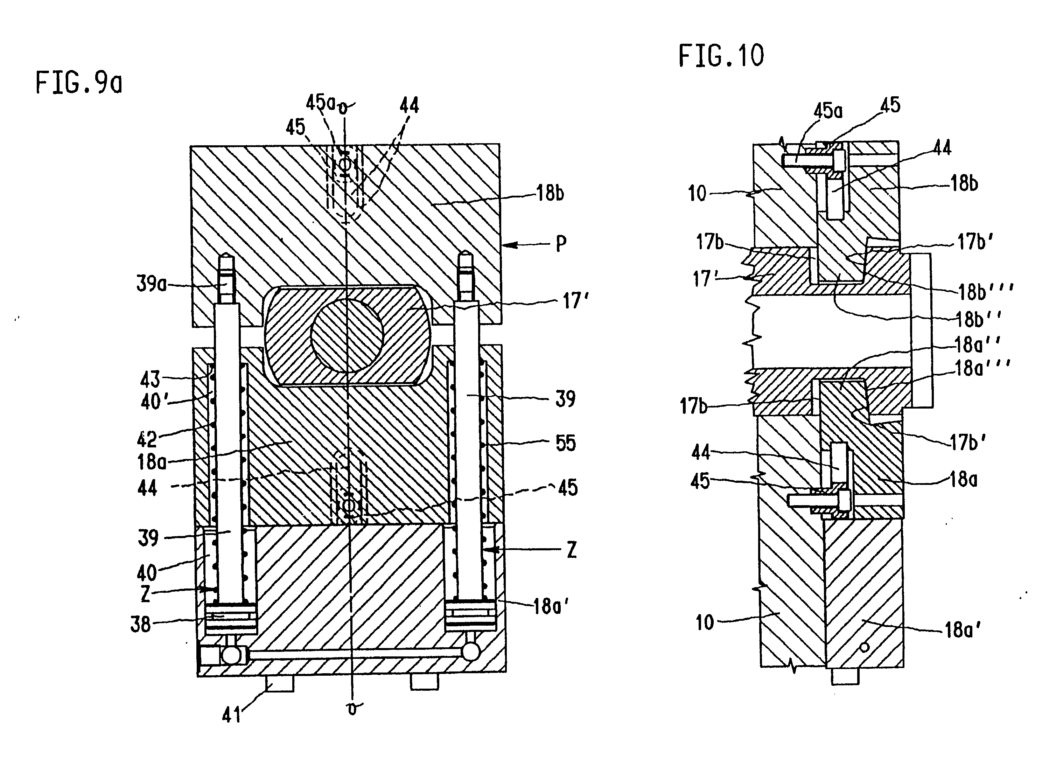

Die an der planen Rückseite des Trägerblockes 10 gleitbaren Schieber 18a, 18a' ; 18b sind mittels in der Symmetrieebene v-v der Verriegelungseinrichtung angeordneten Nutensteinführungen 44 an Nutensteinen 45 geführt. Die Nutensteine 45 sind mittels Schraubenbolzen 45a im Trägerblock verankert, wie insbesondere aus Fig. 10 ersichtlich. Die Nutensteinführungen 44 endigen im passiven Schieber 18b an der Oberkante dieses Schiebers frei. Die Nutensteinführungen 44 im zweiteiligen, aktiven Schieber sind auf der einen Seite durch ein äußeres Schieberteil 18a' abgedeckt. In diesem sind die eigentlichen Zylinder der Entriegelungszylinder Z durch Sacklochbohrungen (Bohrungen 40) gebildet. Diese Sacklochbohrungen 40 liegen koaxial zu Sacklochbohrungen (Bohrungen 40') in einem inneren Schieberteil 18a des aktiven Schiebers 18a,18a'. Das äußere Schieberteil 18a' ist am inneren Schieberteil 18a unter Zentrierung mittels Zentrierzapfen 18c (Fig. 8) mit Hilfe von Schraubenbolzen 41 (Fig. 9) befestigt. Die Bohrungen 40' sind von den Kolbenstangen 39 der Entriegelungszylinder Z durchsetzt, die aus dem aktiven Schieber 18a, 18a' herausragen und in Gewindezapfen 39a endigen. Die Gewindezapfen 39a sind im passiven Schieber 18b durch Gewindeeingriff verankert. In den Bohrungen 40' sind Schraubenfedern 42 angeordnet, welche die Kolbenstangen 39 umschließen. Diese Schraubenfedern sind einenends an Ringschultern 43 gelagert, welche am Übergang der Bohrung 40' in eine dem Durchmesser der Kolbenstange entsprechende Durchgriffsbohrung (Fig. 8, 9) gebildet ist. Am anderen Ende greifen die Schraubenfedern 42 an der Rückseite der Kolben 38 an. Der Entriegelungshub der Entriegelungszylinder Z ist durch die axiale Länge der Bohrungen 40 bestimmt, welche eine größere lichte Weite aufweisen als die die Federn 42 aufnehmenden Bohrungen 40'. In Figuren 9a, 10 befinden sich die Schieber 18a, 18a' ; 18b in Hintergriffsposition, in welcher sich die drucklosen Entriegelunszylinder Z in Ausgangsposition befinden, in der die Kolben 38 sich am unteren Ende der Bohrung 40 befinden. Zur Entriegelung werden die Kolben 38 mit Drucköl beaufschlagt, das über die Anschlußbohrungen 37 in den Zylinderraum einführbar ist. Im Gefolge des Entriegelungshubes gelangen die Kolben an das obere Ende der Bohrungen 40, wo sie an einer Ringschulter anliegen, die am Übergang der Bohrung 40 in die Bohrung 40' gebildet ist. Dabei werden die Schieber 18a, 18a' ; 18b zur Entriegelung auf maximalen gegenseitigen Abstand gesteuert, in welchem die Nutensteine 45 an den der Spritzachse s-s zugewandten Enden der Nutensteinführungen 44 anliegen.

Der Trägerblock 10 nimmt das rückwärtige Ende des Plastifizierzylinders 17' der Plastifiziereinheit 17 in einer zentralen Bohrung 12 (Fig. 2) im Paßsitz auf. In dem den Trägerblock 10 rückseitig überragenden Ende des Plastifizierzylinders 17' sind Spannuten 17b in diametraler Anordnung eingebracht. In diese Spannuten 17b sind die mit segmentförmigen Eingriffspartien 18a'', 18b'' versehenen Schieber 18a, 18a' ; 18b in Hintergriffsposition einschiebbar. Die Eingriffspartien 18a'', 18b'' sind mit Schrägflächen 18a''', 18b''' versehen. Diese Schrägflächen liegen in Verriegelungsposition an schrägen Flanken 17b' der Spannuten 17b an. Der Plastifi-

<div align="center">3</div>

zierzylinder 17' ist mit einem Ringflansch 17a versehen, welcher in einem derartigen axialen Abstand von der Spannut 17b angeordnet ist, daß er bei verriegeltem Plastifizierzylinder 17' an der Stirnseite des Trägerblockes 10 anliegt und insoweit als Widerlager wirkt. Durch das Auflaufen der Schrägflächen 18a''', 18b''' auf die Flanken 17b' der Spannuten 17b wird der axial widergelagerte Plastifizierzylinder 17' axial vorgespannt.

Die Verriegelungseinrichtung ist als bauliche Einheit ausschließlich über die Nutensteine 45 mit dem Block 10 verbunden. Die Schieber 18a, 18a' ; 18b sind nach Maßgabe der Länge der Nutensteinführung 44 relativ zueinander bewegbar.

Mit dem Arretierzylinder 46 kann der Plastifizierzylinder 17' und damit die Plastifiziereinheit bedarfsweise axial festgelegt werden. Die Entriegelungszylinder Z und der Arretierzylinder 46 sind zur synchronen Entriegelung und axialen Arretierung der Plastifiziereinheit 17 miteinander hydraulisch verbunden und somit gleichzeitig betätigbar. Die axial arretierte Plastifiziereinheit 17 ist bei außer Hintergriffsposition befindlichen Schiebern 18a, 18a' ; 18b durch eine begrenzte Rückwärtsbewegung des Blockes 10 aus dem Block freisetzbar. Die begrenzte Rückwärtsbewegung des Blockes 10 erfolgt im Gefolge eines Rückwärtshubes der Antriebszylinder A.

Die Plastifiziereinheit 17 ist bedarfsweise mit Hilfe einer mechanischen Verriegelungseinrichtung M im Block 10 verriegelbar. Diese umfaßt zwei mittels Gewindebolzen 47 in Hintergriffsposition verspannbare Verriegelungsleisten 18m. Die Eingriffspartien 18m' dieser Verriegelungsleisten 18m sind identisch mit den Eingriffspartien 18a'' ; 18b'' der hydraulisch betätigbaren und nach Programm des Rechners der Spritzgießmaschine arbeitenden Schieber 18a, 18a' ; 18b, die einen automatischen Wechsel der Plastifiziereinheit ermöglichen.

Ein besonderer Vorteil der 'offenen', also gut überschaubaren Anordnung der Verriegelungseinrichtung P bzw. M am Block 10 besteht darin, daß das Bedienungspersonal mit einem Blick feststellen kann, ob die Plastifiziereinheit 17 im Block 10 verriegelt ist oder nicht. Dies war bei der bisher üblichen 'geschlossenen' Bauweise nicht der Fall.

Im zeichnerisch dargestellten Ausführungsbeispiel sind die Schieber (18a, 18a' ; 18b) über zwei nur einseitig arbeitende Entriegelungszylinder Z miteinander verbunden. Selbstverständlich können auch beidseits beaufschlagbare Hydraulikzylinder vorgesehen sein, so daß die Schieber ohne Federkraft, das heißt ausschließlich hydraulisch, in Hintergriffsposition überführt und dort gehalten werden können. In diesem Falle ist also ein rückseitiger Zylinderraum zur Entriegelung und ein vorderer Zylinderraum zur Verriegelung des Plastifizierzylinders vorgesehen.

## Ansprüche

1. Einrichtung (Verriegelungseinrichtung P) zur Verriegelung des auswechselbaren Plastifizierzylinder (17') einer Kunststoff-Spritzgießeinheit in Arbeitsposition an ihrem Trägerblock (10) mittels zweier diametral zum Plastifizierzylinder (17') der Plastifiziereinheit (17) angeordneter und radial führbarer Schieber (18a, 18b), die den Plastifizierzylinder (17') durch Hintergriff in Arbeitsposition axial festlegen und die mit Hilfe wenigstens eines Hydraulikzylinders (Entriegelungszylinder Z) aus ihrer Hintergriffsposition zur Freisetzung der Plastifiziereinheit (17) bis zum Auflaufen auf einen Anschlag (Nutenstein 44) verschiebbar sind, dadurch gekennzeichnet, daß die Schieber (18a, 18a' ; 18b) über zwei symmetrisch zur Symmetrieebene (v-v in Fig. 1, 9) der Verriegelungseinrichtung (P) angeordnete Entriegelungszylinder (Z) miteinander verbunden sind, wobei das eine Funktionsteil (Zylinder oder Kolben 38) beider Entriegelungszylinder in den einen Schieber (aktiver Schieber 18a, 18a') integriert ist und das andere Funktionsteil (Kolben 38 oder Zylinder) aus dem aktiven Schieber (18a, 18a') herausragt und am anderen Schieber (passive Schieber 18b) befestigt ist.

2. Verriegelungseinrichtung nach Patentanspruch 1, dadurch gekennzeichnet, daß die eigentlichen Zylinder der Entriegelungszylinder (Z) durch Bohrungen (40) im aktiven Schieber (18a, 18a') gebildet sind und daß an den Kolben (38) rückseitig angreifende, koaxiale Schraubenfedern (42) an Ringschultern (43) der aktiven Schieber (18a, 18a') widergelagert und die Kolbenstangen (39) der Entriegelungszylinder (Z) mittels Gewindezapfen (39a) mit dem passiven Schieber (18b) verbunden sind.

3. Verriegelungseinrichtung nach Patentanspruch 1 oder 2, dadurch gekennzeichnet, daß die an der planen Rückseite des Trägerblockes (10) gleitbaren Schieber (18a, 18a' ; 18b) mittels in ihrer Symmetrieebene (v-v) angeordneten Nutensteinführungen (44) an Nutensteinen (45) geführt sind, die im Trägerblock (10) verankert sind.

4. Verriegelungseinrichtung nach Patentanspruch 3, dadurch gekennzeichnet, daß die Nutensteinführungen (44) im passiven Schieber (18b) auf einer Seite offen und die Nutensteinführungen (44) im zweiteiligen, aktiven Schieber (18a, 18a') auf der einen Seite durch ein äußeres Schieberteil (18a') abgedeckt sind, in welchem die eigentlichen Zylinderräume der Entriegelungszylinder durch Sacklochbohrungen (Bohrungen 40) gebildet sind, die koaxial zu Sacklochbohrungen (Bohrungen 40') des inneren Schieberteils (18a) liegen.

5. Verriegelungseinrichtung nach einem der vorhergehenden Patentansprüche, dadurch gekennzeichnet, daß der Trägerblock (10) das rückwärtige Ende des Plastifizierzylinders (17') der Plastifiziereinheit (17) in einer zentralen Bohrung im Paßsitz aufnimmt und daß in dem den Trägerblock (10) rückseitig überragenden Ende des Plastifizierzylinders (17) Spann-Nuten (17b) in diametraler Anordnung eingebracht sind, in welchen die Schieber (18a, 18a' ; 18b) mit segmentformigen Eingriffspartien (18a", 18b") in Hintergriffsposition einschiebbar sind, in welcher Verriegelungsposition Schrägflächen (18a'''; 18b''') der Eingriffspartien(18a, 18b') an schrägen Flanken (17b') der Spannnuten (17b) anliegen, wobei der Plastifizierzylinder (17') mittels eines Ringflansches (17a) an der Stirnseite des Trägerblockes (10) widergelagert ist (Fig. 8, 10).

6. Verriegelungseinrichtung nach einem der vorhergehenden Ansprüche 1, 3-5, dadurch gekennzeichnet, daß die Schieber (18a, 18a' ; 18b) über beidseits beaufschlagbare Entriegelungszylinder (Z) miteinander verbunden und durch diese in Hintergriffsposition überführbar sind.

7. Verriegelungseinrichtung nach einem der vorhergehenden Patentansprüche, dadurch gekennzeichnet, daß die Entriegelungszylinder (Z) und ein hydraulischer Zylinder (Arretierzylinder 46) zur axialen Arretierung der Plastifiziereinheit (17) miteinander hydraulisch in Verbindung stehen und synchron beaufschlagbar sind.

8. Verriegelungseinrichtung nach Patentanspruch 7, dadurch gekennzeichnet, daß die axial arretierte Plastifiziereinheit (17) bei außer Hintergriffsposition befindlichen Schiebern (18a, 18a' ; 18b) durch eine begrenzte Rückwärtsbewegung des Blockes (10) im Gefolge eines Rückwärtshubes der Antriebszylinder (A) aus dem Block freisetzbar ist.

9. Verriegelungseinrichtung nach einem der vorhergehenden Patentansprüche, dadurch gekennzeichnet, daß die Plastifiziereinheit (17) bedarfsweise mit einer mechanischen Verriegelungseinrichtung (M) im Block (10) verriegelbar ist, welche zwei mittels Gewindebolzen (47) in Hintergriffs-position verspannbare Verriegelungsleisten (18m) umfaßt, deren Eingriffspartien (18m') identisch sind mit den Eingriffspartien (18a" ; 18b") der hydraulisch betätigbaren Schieber (18a, 18a' ; 18b).

## Claims

1. Device (locking device P) for locking the exchangeable plastification cylinder (17') of a plastic injection-moulding unit in the operative position to its carrier block (10) by means of two slides (18a, 18b), which are arranged diametrically to the plastification cylinder (17') of the plastification unit (17) and radially guided and which axially secure the plastification cylinder (17') by rearward engagement in the operative position and which are displaceable by means of at least one hydraulic cylinder (unlocking cylinder Z) from their rearward engaging position for releasing the plastification unit (17) until running against a stop (groove block 44), **characterised in that** the slides (18a, 18a' ; 18b) are interconnected via two unlocking cylinders (Z) which are arranged symmetrically relative to the plane of symmetry (v-v in Fig. 1, 9) of the locking device (P), in which respect the one operative member (cylinder or piston 38) of both unlocking cylinders are integrated into the one slide (active slide 18a, 18a'), and the other operative member (piston 38 or cylinder) protrudes from the active slide (18a, 18a') and is attached to the other slide (passive slide 18b).

2. Locking device according to claim 1, **characterised in that** the actual cylinders of the unlocking cylinders (Z) are formed by bores (40) in the active slide (18a, 18a'), and in that rearwardly engaging co-axial coiled springs (42) abut against annular shoulders (43) of the active clides (18a, 18a') and that the piston rods (39) of the unlocking cylinders (Z) are connected to the passive slide (18b) by means of threaded pins (39a).

3. Locking device according to claim 1 or 2, **characterised in that** the slides (18a, 18a' ; 18b), which slide at the plane rear end of the carrier block (10), are guided on groove blocks (45) by means of groove-block guides (44) which are arranged in their plane of symmetry (v-v) and anchored in the carrier block (10).

4. Locking device according to claim 3, **characterised in that** the groove-block guides (44) are open in the passive slide (18b) on the one side, and the groove-block guides (44) in the two-sectional active slide (18a, 18a') are covered on the one side by an external slide member (18a') where in the actual cylinder spaces of the unlocking cylinders are formed by pocket bores (bores 40) which are placed co-axially relative to the pocket bores (bores 40') of the inner slide member (18a).

5. Locking device according to one of the above claims, **characterised in that** the carrier block (10) accommodates the rearward end of the plastification cylinder (17') of the plastificafion unit (17) in a central bore in The seat, and in that clamping grooves (17b) are inserted in a diametrical arrangement into the end, which extends beyond the rear end of the carrier block (10), of the plastification cylinder (17), into which grooves the slides (18a, 18a' ; 18b) are insertable by way of segmented engaging parts (18a", 18b") in a rearward engaging position, in which locking position transverse surfaces (18a'''; 18b''') of the engaging parts (18a', 18b') abut against transverse flanks (17b') of the clamping grooves (17b), whereby the plastification cylinder (17') is abutted against the front end of the carrier block (10) by means of an annular flange (17a) (Fig. 8, 10).

6. Locking device according to one of claims 1, 3-5, **characterised in that** the slides (18a, 18a' ; 18b) are interconnected by unlocking cylinders (Z), which are loaded via both sides, and are transferable by them into the rearward engaging position.

7. Locking device according to one of the above claims, **characterised in that** the unlocking cylinders (Z) and a hydraulic cylinder (arresting cylinder 46) are hydraulically connected to each other and synchronously loadable for axially arresting the plastification unit (17).

8. Locking device according to claim 7, **characterised in that** the axially arrested plastification unit (17) with slides (18a, 18a' ; 18b) out off the rearward engaging position are released by a limited reverse movement of the block (10) together with a rearward stroke of the drive cylinder (A).

9. Locking device according to one of the above claims, **characterised in that** the plastification unit (17) can be locked, if required, in the block (10) by means of a mechanical locking device (M) which comprises two locking ledges (18m), which are clamped in rearward engaging position by means of threaded bolts (47) and the engaging parts (18m') of which are identical to the engaging parts (18a" ; 18b") of the hydraulically operated slides (18a, 18a' ; 18b).

## Revendications

1. Dispositif (dispositif de verrouillage P) pour verrouiller en position de travail sur son bloc porteur (10) le cylindre de ramollissement interchangeable (17') d'une unité de moulage de matière plastique par injection au moyen de deux coulisseaux (18a, 18b) qui sont disposés en étant diamétralement opposés par rapport au cylindre de ramollissement (17') de l'unité de ramollissement (17), qui peuvent être guidés radialement, qui fixent axialement le cylindre de ramollissement (17') en position de travail par prise par l'arrière et qui peuvent être déplacés à l'aide d'au moins un vérin hydraulique (vérin de déverrouillage Z) hors de leur position de prise par l'arrière en vue de dégager l'unité de ramollissement (17) jusqu'à ce qu'ils rencontrent une butée (tête de goujon de guidage 44), caractérisé par le fait que les coulisseaux (18a, 18a' ; 18b) sont reliés entre eux par l'intermédiaire de deux vérins de déverrouillage (Z) disposés symétriquement par rapport au plan de symétrie (v-v sur les figures 1, 9) du dispositif de verrouillage (P), l'une des parties fonctionnelles (cylindre ou piston 38) des deux vérins de déverrouillage étant intégrée à l'un des coulisseaux (coulisseau actif 18a, 18a') et l'autre partie fonctionnelle (piston 38 ou cylindre) faisant saillie hors du coulisseau actif (18a, 18a') et étant fixée à l'autre coulisseau (coulisseau passif 18b).

2. Dispositif de verrouillage selon la revendication 1, caractérisé par le fait que le cylindre du vérin de déverrouillage (Z) est constitué par des perçages (40) ménagés dans le coulisseau actif (18a, 18a'), et par le fait que des ressorts hélicoïdaux coaxiaux (42) en prise sur le côté arrière du piston (38) sont en contre-butée sur des épaulements annulaires (43) du coulisseau actif (18a, 18a'), et que les tiges de piston (39) des vérins de déverrouillage (Z) sont reliées au coulisseau passif (18b) au moyen de goujons filetés (39a).

3. Dispositif de verrouillage selon la revendication 1 ou 2, caractérisé par le fait que les coulisseaux (18a, 18a' ; 18b) qui peuvent glisser sur la face arrière plane du bloc porteur (10) sont guidés, au moyen de rainures de guidage (44) ménagées dans leur plan de symétrie (v-v), sur des têtes de goujons de guidage (45) ancrées dans le bloc porteur (10).

4. Dispositif de verrouillage selon la revendication 3, caractérisé par le fait que les rainures de guidage (44) ménagées dans le coulisseau passif (18b) sont ouvertes d'un côté, et que les rainures de guidage (44) ménagée dans le coulisseau actif en deux parties (18a, 18a') sont recouvertes sur l'un de leurs côtés par une partie de coulisseau extérieure (18a') dans laquelle les volumes intérieurs des cylindres des vérins de déverrouillage sont constitués par des perçages borgnes (perçages 40) qui sont situés de manière coaxiale par rapport à des perçages borgnes (perçages 40') de la partie de coulisseau intérieure (18a).

5. Dispositif de verrouillage selon l'une des revendications précédentes, caractérisé par le fait que le bloc porteur (10) reçoit l'extrémité arrière du cylindre de ramollissement (17') de l'unité de ramollissement (17) dans un perçage central et avec un ajustement serré, et par le fait que, dans l'extrémité du cylindre de ramollissement (17') qui fait saillie vers l'arrière au-delà du bloc porteur (10), sont ménagées des rainures de serrage (17b) disposées de manière diamétralement opposée dans lesquelles les coulisseaux (18a, 18a' ; 18b) peuvent être introduits par des parties d'attaque en forme de segments (18a", 18b") dans une position de prise par l'arrière qui est une position de verrouillage dans laquelle des surfaces obliques (18a''' ; 18b''') des parties d'attaque (18a", 18b") portent sur des flancs obliques (17b') des rainures de serrage (17b), le cylindre de ramollissement (17') étant en contre-butée sur le côté frontal du bloc porteur (10) au moyen d'une bride annulaire (17a) (Figures 8, 10).

6. Dispositif de verrouillage selon l'une des revendications précédentes 1 et 3 à 5, caractérisé par le fait que les coulisseaux (18a, 18a' ; 18b) sont reliés entre eux par l'intermédiaire de vérins de déverrouillage (Z) pouvant être soumis des deux côtés à l'action du fluide, et que ceux-ci peuvent les faire passer dans la position de prise par l'arrière.

7. Dispositif de verrouillage selon l'une des revendications précédentes, caractérisé par le fait que le vérin de déverrouillage (Z) et un vérin hydraulique (vérin de blocage 46) sont reliés entre eux hydrauliquement en vue du blocage axial de l'unité de ramollissement (17), et qu'ils peuvent être actionnés en synchronisme.

8. Dispositif de verrouillage selon la revendication 7, caractérisé par le fait que l'unité de ramollissement (17), lorsqu'elle est bloquée axialement tandis que les coulisseaux (18a, 18a' ; 18b) se trouvent hors de la position de prise par l'arrière, peut être dégagée du bloc par un déplacement limité vers l'arrière du bloc (10) à la suite d'une course vers l'arrière du vérin d'entraînement (A).

9. Dispositif de verrouillage selon l'une des revendications précédentes, caractérisé par le fait que l'unité de ramollissement (17) peut être verrouillée dans le bloc (10), si besoin en est, au moyen d'un dispositif de verrouillage mécanique (M) comportant deux barres de verrouillage (18m) qui peuvent être serrées en position de prise par l'arrière au moyen de goujons filetés (47) et dont les parties d'attaque (18m') sont identiques aux parties d'attaque (18a", 18b") des coulisseaux à actionnement hydraulique (18a, 18a' ; 18b).

FIG.1

FIG.2

19

20b

10

11

13

15

20c

20a

12

13

A

20b

A

20a

20b

19

19b

EP 0 314 942 B1

9

FIG.3

19    20b    20c    A    20e    20a    19c    20d    20b    19b

FIG.4

FIG.5

EP 0 314 942 B1

FIG.6

FIG.7

EP 0 314 942 B1

# FIG.8

# FIG.9

FIG.9a

FIG.10

EP 0 314 942 B1